(19) Europäisches Patentamt
European Patent Office
Office européen des brevets

(11) **EP 2 169 433 A1**

(12) **EUROPEAN PATENT APPLICATION**

(43) Date of publication:
**31.03.2010 Bulletin 2010/13**

(51) Int Cl.:
**G01V 3/17** [(2006.01)] **G01S 13/90** [(2006.01)]

(21) Application number: **08017024.4**

(22) Date of filing: **26.09.2008**

| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS** | (71) Applicant: **Siemens Aktiengesellschaft**<br>**80333 München (DE)**<br><br>(72) Inventor: **Kocifaj, Moroslav**<br>**841 07 Bratislava (SK)** |

(54) **A method and a device for analyzing a forest enviroment by using scattered beams of electromagnetic radiation**

(57) The invention refers to a method for analyzing a forest environment by using beams (B1, B2) of electromagnetic radiation. In a first step, one or more values of a bulk scattering phase function of one or more scattered beams (B2) are measured or measurements of one or more values of a bulk scattering phase function of one or more scattered beams (B2) are provided as input data. Each scattered beam (B2) for which the value of the bulk scattering phase function is measured results from a scattering of a beam (B1) incident on a piece of forest (1) in a predetermined direction. Based on the measured scattered beams, the number of trees in the piece of forest can be determined based on the physical dependen-cy between the one or more values of the bulk scattering phase function of the one or more scattered beams and the number of trees in the piece of forest. The invention has the advantage that a position-specific contactless monitoring of a forest environment is possible in any region including poorly accessible places. In a practical implementation, an antenna and a detector in a plane are used for transmitting the incident beams and receiving the scattered beam. When flying across the piece of forest to be analyzed, the antenna directs incident beams on the piece of forest and the detector measures the scattered beams. The invention enables an analysis of forest environments with high granularity compared to known satellite measurements.

## FIG 1

**Description**

The invention refers to a method and a device for analyzing a forest environment by using beams of electromagnetic radiation.

There is a growing interest in monitoring forest environments due to ecological reasons as well as reasons referring to energy and wood production. Hence, there is a need for the systematic monitoring of forest environments in order to determine the biomass available in certain woodlands. However, the majority of woodlands are situated in poorly accessible terrains, e.g. mountain regions, such that information about those woodlands is difficult to obtain.

At present, satellite imaging systems monitor the earth surface remotely. The scanned images of the earth surface are analyzed by image-processing routines in order to recognize features of the earth surface, like plants, forests etc. However, those methods do not provide detailed information about the characteristics of forest environments. Furthermore, satellite systems do not work well at local scale.

Therefore, it is an object of the invention to analyze a forest environment in order to obtain more precise information about the analyzed piece of forest.

This object is solved by a method according to claim 1, by a device according to claim 13 or a computer program product according to claim 15. Preferred embodiments of the invention are defined in the dependent claims.

The method of the invention enables contactless analyzing of a forest environment by using beams of polarized or nonpolarized electromagnetic radiation. To do so, one or more values of a bulk scattering phase function of one or more scattered beams are measured. Alternatively, measurements of one or more values of a bulk scattering phase function are taken as input data for the method. Each measured scattered beam results from a scattering of a beam incident on a piece of forest in a predetermined direction. The term "scattering phase function" is well-known for a skilled person and represents the amount of radiative energy scattered at a single object to specific direction. In the context of the invention, a bulk scattering phase function refers to this scattering phase function for a bulk of a plurality of trees in the piece of forest and not for a single object. By using the measured data, the number of trees in the piece of forest is determined based on a physical dependency between the one or more values of the bulk scattering phase function and the number of trees in the piece of forest.

According to the invention, it was realized that known physical relations may be used in order to derive from a scattering of a beam at a piece of forest the number of trees in this piece of forest. The method of the invention has the advantage that the distance between the source of the incident beam and the piece of forest can be chosen much smaller than the difference between a satellite and the piece of forest. Hence, measurements with a higher granularity compared to satellite measurements are possible. This enables precise determination of the number of trees in the piece of forest. Furthermore, the method according to the invention is based on contactless measurements, thus enabling the analysis of poorly accessible woodlands, e.g. by performing measurements based on beams transmitted from antennas on planes or helicopters flying across the woodlands to be analyzed.

In a preferred embodiment of the invention, the number of trees in the piece of forest is determined by using the well-known $S_{11}$ scattering phase function (i.e. the first element of the Mueller matrix) where the values of the $S_{11}$ scattering phase function depend on the direction of the incident and scattered beams with respect to the cylindrical trees in the piece of forest.

The Mueller matrix is well-known from scattering theory and describes the angular behavior of the scattered light and in general it maps the Stokes parameters of the incident and scattered radiation (see e.g. document [1], chapter 23). The $S_{11}$ scattering phase function is the entry of the first row and first column of the Mueller matrix. There exist well-known methods in order to calculate the $S_{11}$ scattering phase function in dependency on the direction of the incident and scattered beams with respect to a cylinder corresponding to a cylindrical tree in the piece of forest. In a preferred embodiment, the $S_{11}$ scattering phase function is calculated based on a discrete dipole approximation which is applicable to various targets - thus it can be applied to trees of complex shapes, too. E.g., the discrete dipole approximation code DDSCAT 6.1 may be used for calculating the $S_{11}$ phase with different directions of the incident and scattered beams (see document [1]).

In another embodiment of the invention, the number of trees is not merely calculated as a total number but includes the number of trees for different tree volumes, thus resulting in more detailed information about the piece of forest.

In a preferred embodiment, the method of the invention considers the scattered signals measured for a set of orientations of the trees in the piece of forest in respect to the incident beam of light. It requires the calculation of several values of the bulk scattering phase function of a scattered beams for different directions of incident beams. The following physical dependency between each value of the bulk scattering phase function and the number of trees in the piece of forest is used for determining the number of trees with different tree volumes:

$$p(\theta,\varphi,\Theta,\Phi,\beta,r,\lambda,\varepsilon)=\left(\frac{\lambda^2}{2\pi}\right)\int_0^\infty \frac{S_{11}(\theta,\varphi,\Theta,\Phi,\beta,r,\lambda,\varepsilon)}{\pi r^2}f(r)dr \quad,$$

wherein

p is the bulk scattering phase function of the scattered beam (being measured for several orientations);

$S_{11}(\theta,\varphi,\Theta,\Phi,\beta,r,\lambda,\varepsilon)$ is the $S_{11}$ scattering phase function, i.e. the first element, of the Mueller matrix;

$\theta,\varphi$ describe the direction and scattering plane of the scattered beam;

$\Theta,\Phi,\beta$ are Euler angles describing the orientation of the trees in the piece of forest with respect to the incident beam;

r is radius of a virtual sphere having the volume identical to the volume of a cylindrical tree having length l and radius a;

$\lambda$ is the wavelength of the electromagnetic radiation of the beams;

$\varepsilon$ is the dielectric constant of wood at a given wavelength;

f(r) is the number of trees in the piece of forest having length 1 and radius a.

The above listed equation can be algebraized and split to set of equations, each for discrete orientation of the cylindrical tree in respect to the incident beam of light. By deriving f(r) from the above set of equations for different orientations of the trees with respect to the incident beam, one can obtain the number of trees in dependence of r, where r refers to a virtual sphere characterizing the volume of the tree.

There exist well-known methods for solving the above set of equations. In a preferred embodiment, Tikhonov's regulation is used for the solution. Tikhonov's regulation is for example explained in document [2].

In another embodiment of the invention, the number of trees includes the number of trees with a predetermined volume, particularly with an average volume. By characterizing the number of trees by an average volume, the method for calculating the number of trees can be simplified. To do so, the method is based on a single measured value of the bulk scattering phase function and the following physical dependency between the scattering phase function (i.e. the single value of this function) and the number of trees in the piece of forest is used for determining the number of trees with an average volume:

$$p(\theta,\varphi,\Theta,\Phi,\beta,r_{mean},\lambda,\varepsilon)=\left(\frac{\lambda^2}{2\pi}\right)\frac{S_{11}(\theta,\varphi,\Theta,\Phi,\beta,r_{mean},\lambda,\varepsilon)}{\pi r_{mean}^2}N$$

wherein

p is the bulk scattering phase function of the scattered beam (from which a single value is known);

$S_{11}(\theta,\varphi,\Theta,\Phi,\beta,r,\lambda,\varepsilon)$ is the scattering phase function of the Mueller matrix;

$\theta,\varphi$ describe the direction and scattering plane of the scattered beam;

$\Theta,\Phi,\beta$ are Euler angles describing the orientation of the trees in the piece of forest with respect to the incident beam (B1);

$r_{mean}$ is the radius of a virtual sphere having the average volume of a tree;

$\lambda$ is the wavelength of the electromagnetic radiation of the beams;

$\varepsilon$ is the dielectric constant of wood at the wavelength of the incident beam;

N is the number of trees in the piece of forest with the average volume.

As can be readily seen, no integral equation has to be solved, thus enabling a straightforward calculation by using a single measured value of p.

In a preferred embodiment of the invention, the biomass volume and/or the biomass (i.e. the weight) of the piece of forest are calculated by using the number of trees in the piece of forest. This is a straightforward calculation because the number of trees is known, e.g. in dependency on different tree volumes or in dependency on an average tree volume. By multiplying the respective number of trees with those tree volumes, a total value for the biomass can be obtained. By using the density of wood, the weight of the biomass volume may also be calculated by multiplying the density with the volume of the biomass.

In a preferred embodiment of the invention, the dielectric constant $\varepsilon$ of the wood of the trees in the piece of forest is determined from the following equation:

$$\varepsilon = \varepsilon_0 \, \varepsilon_{rel} \left( 1 - i \tan \delta \right).$$

where

$\varepsilon_{rel}$ assumes a value between 1.2 to 2.1 (for centimeter-decimeter wavelengths) and

$\tan\delta$ assumes a value between 0.03 and 0.04 for the same spectral range.

The above defined range of values refers to wood and the actual value being used may depend on the pre-knowledge about the kind of wood preferably grown in the piece of forest to be analysed.

In another embodiment of the invention, the wavelength of the electromagnetic radiation of the beams is such that it corresponds to an estimated radius of the trees in the piece of forest. It is well-known that the best response of a scattered radiation is achieved when the wavelength of the radiation is in the range of the size of the scatterer, where the scatterer according to the invention refers to a tree.

In a preferred practical implementation of the invention, the one or more values of the phase function characterizing the intensity of scattered beams result from measurements where an antenna sends a beam in a predetermined direction to the piece of forest and a detector detects the beam after being scattered at the piece of forest. Preferably, the antenna and the detector are part of a plane or helicopter flying across the piece of forest, thus enabling the monitoring of forest environments even in remote and poorly accessible regions.

Besides the above method, the invention also refers to a device for analyzing a forest environment comprising:

- means for measuring one or more values of a bulk scattering phase function of one or more scattered beams or providing measurements of one or more values of a bulk scattering phase function of one or more scattered beams as input data, each scattered beam resulting from a scattering of a beam incident on a piece of forest in a predetermined direction;
- means for determining the number of trees in the piece of forest based on a physical dependency between the one or more values of the bulk scattering phase function and the number of trees in the piece of forest.

The device is preferably arranged such that any variant of the above described methods may be performed by the device.

Moreover, the invention refers to a computer program product directly loadable into the internal memory of a digital computer, comprising software code portions for performing any variant of the above method of the invention when the product is run on a computer.

Embodiments of the invention will now be described with respect to the accompanying drawings wherein:

Fig. 1    shows a perspective view of a scenario for analyzing a forest environment according to one embodiment of the invention; and

Fig. 2    shows the concept of Euler angles used in one embodiment of the invention to describe the direction of the beams and the orientation of a cylindrical tree.

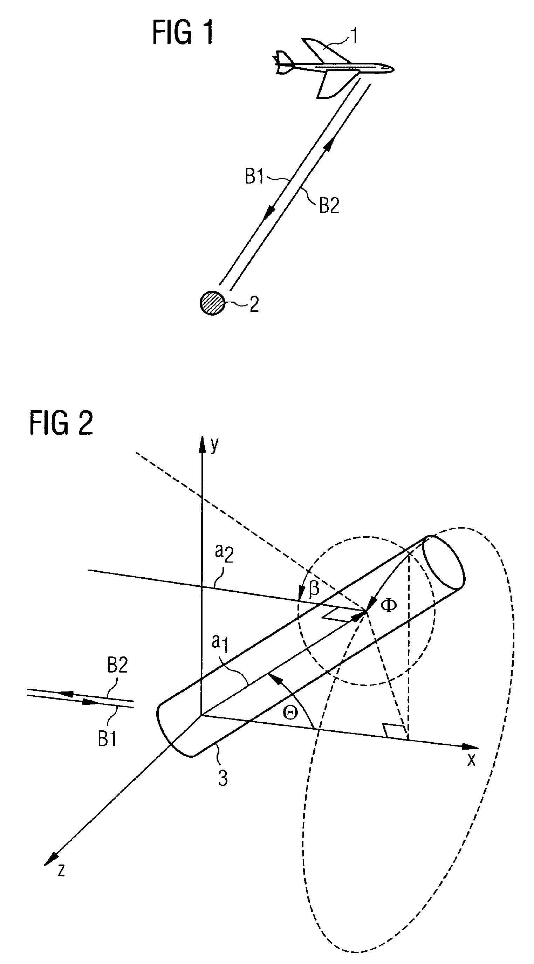

Fig. 1 shows a perspective view of a scenario in which the scattering phase function corresponding to a beam transmitted from a plane 1 and scattered at a piece of forest 2 is used for determining the number of trees in the piece of forest 2. To do so, the plane 1 includes an antenna with beamforming abilities (not shown) sending out a beam B1 of electromagnetic radiation. This beam is scattered at the piece of forest piece 2. A detector (not shown) in the plane is used for detecting the beam B2 scattered in backward direction, i.e. by an angle $\theta=\pi$. In the embodiments described hereinafter, the values of the scattering phase function for the backscattering direction are analysed. Nevertheless, it may also be possible to analyse a beam scattered in other directions than backwards.

Any well-known transmitting antenna device with directional characteristics may be used as an antenna for transmitting beam B1. In the method as described hereinafter, the principles of interaction of electromagnetic radiation with environmental inhomogeneities, i.e. with trees, are utilized. To do so, a tree is considered to be a finite-sized circular cylinder with length 1 and diameter $2a$, where $2a<<l$. In principle, a scattered electromagnetic wave occurs if an obstacle is placed into an outer electromagnetic field. It is well-known that the characteristics of the scattered radiation respond quickly to a small change of the obstacle's geometry if the wavelength $\lambda$ of an incident radiation is less than or comparable to the characteristic size of the scatterer. Therefore, sensing of a forest environment is optimal at $\lambda \cong a$. Consequently, the wavelength of the electromagnetic radiation transmitted by the antenna is chosen such that it lies in the range of an average radius $a$ of the trees located in the piece of forest 2, i.e. $\lambda \cong a$.

According to the invention as described hereinafter, values of the bulk scattering phase function for the beam B2 are measured. From the information about the bulk scattering phase function one can derive the number of trees in the piece of forest as well as the biomass in this piece of forest. To do so, a single tree is modelled as a cylinder. The interaction of an electromagnetic radiation with a cylinder depends on many factors, such as the wavelength of the incident radiation, the orientation of the cylinder with respect to the direction of the incident wave, the dielectric constants and the size of the cylinder.

In the following, the concept of Euler angles $\Theta, \Phi$ and $\beta$ is used for describing the orientation of a tree with respect to the direction of a beam incidence. The concept of Euler angels is illustrated in Fig. 2. This figure shows an example of a tree modelled as a cylinder 3. The orientation of the cylinder is indicated with respect to the Cartesian coordinate system including the axes x, y and z. In the scenario of Fig. 2, the incident beam B1 being scattered at the cylinder 3 is oriented in the direction of the x-axis, and the direction of the scattered beam B2 is in the opposite direction of the x-axis. The orientation of the cylinder 3 is specified by Euler angles $\Theta$ and $\Phi$. The Euler angle $\Theta$ describes the orientation of the longitudinal axis a1 of the cylinder with respect to the x-axis and the Euler angle $\Phi$ describes the rotation of the longitudinal axis a1 around the direction of the incident beam of light (i.e. a1 lies in the x-y-plane when $\Phi=0$ while a1 lies in x-z-plane when $\Phi=\pi/2$). The other Euler angle $\beta$ specifies the rotation of the cylinder around the longitudinal axis a1. When $\beta=0$, the axis a2 lies in the al-x-plane. Due to the symmetry of the cylinder 3, the Euler angle $\beta$ and the corresponding axis a2 may be chosen arbitrarily but with a fixed value. The orientation as defined in Fig. 2 is part of the discrete dipole approximation code DDSCAT 6.1 (see document [1]) which is used in one embodiment of the invention to calculate the values of the $S_{11}$ function as will be described in the following.

The directions of the beams scattered by the cylinder 3 is described by the angles $\theta$ and $\varphi$. The angle $\theta$ is the scattering angle and is chosen to be $\pi$ as mentioned before. The angle $\varphi$ specifies the orientation of the scattering plane relative to a reference plane. The pair consisting of the vector characterizing the orientation of the component of the first incident polarization mode and the vector corresponding to the direction of propagation of the incident radiation constructs the reference plane. In Fig. 2, the reference plane is the plane spanned by the axes x and y. When $\varphi=0$, the scattering plane coincides with the reference plane. Within the scattering plane, directions are specified by $0 \le \theta \le \pi$. In the embodiment described hereinafter, $\theta$ is chosen to be $\pi$. Furthermore, in a preferred embodiment, unpolarized beams are used such that the angle $\varphi$ may be chosen arbitrarily but needs to be fixed.

The spatial redistribution of the radiative energy after a scattering event, i.e. after an interaction of the electromagnetic radiation with the cylinder 3 in Fig. 2, is characterized by the scattering phase function $S_{11}(\theta,\varphi,\Theta,\Phi,\beta,l,a,\lambda,\varepsilon)$. This function is well-known from scattering theory and corresponds to the entry in the first row and first column of the well-known 4x4 Mueller matrix describing the scattering properties of an object. For the scattering by a cylindrical object, this function depends on the angles $\theta$ and $\varphi$ characterizing the scattered beams, on the Euler angles $\Theta$, $\Phi$ and $\beta$ referring to the orientation of the scatterer (tree) as well as on the length 1 and the radius a of the cylinder 3. Moreover, the phase function also depends on the wavelength $\lambda$ of the electromagnetic radiation and on the dielectric constant $\varepsilon$ of the material from which the cylinder is made. When performing a measurement based on a scattered beam B2, all those parameters are known.

The above scattering phase function $S_{11}$ for a single cylinder satisfies the following normalization condition:

$$\frac{1}{4\pi}\int_{4\pi}d\vec{n}_{sca}S_{11}(\theta,\varphi)=\frac{1}{2}\int_{0}^{\pi}d\theta\sin\theta\,S_{11}(\theta,\varphi)=1 \qquad (1)$$

where $\vec{n}_{sca}$ is the unit vector in the direction of the scattered beam.

It is a straightforward and well-known procedure to calculate values of the phase function $S_{11}$. In the embodiment described herein, the discrete dipole approximation code DDSCAT 6.1 (see document [1]) is used for calculating $S_{11}$ for a cylindrical particle.

For a system of arbitrarily sized cylinders, i.e. for a piece of forest, the bulk phase function p of a scattered beam B2 depends on the phase function $S_{11}$ as follows:

$$p(\theta,\varphi,\Theta,\Phi,\beta,r,\lambda,\varepsilon)=\left(\frac{\lambda^2}{2\pi}\right)\int_{0}^{\infty}\frac{S_{11}(\theta,\varphi,\Theta,\Phi,\beta,r,\lambda,\varepsilon)}{\pi r^2}f(r)dr \qquad (2)$$

where r is the radius of a virtual sphere having the volume of a cylindrical tree with length l and radius a, i.e.

$$\frac{4}{3}\pi r^3 = \pi a^2 l \qquad (3)$$

$f(r)$ is the number distribution function of trees, i.e. $f(r)$ specifies the number of trees in the piece of forest for which condition (3) is valid. Hence, $f(r)$ represents the distribution of trees with certain volumes $\frac{4}{3}\pi r^3$. Recent studies have shown that for most trees the length 1 of the tree depends on the radius a as follows:

$$l = c_1 a^2 + c_2 a \qquad (4)$$

where $c_1$ and $c_2$ are constants known for certain kinds of trees.

Hence, when one has determined the distribution function $f(r)$, it is also possible to determine the distribution of the trees with different radii by using equation (4).

The above equation (2) is a Fredholm integral equation of the first kind where $f(r)$ represents an unknown function to be retrieved.

To solve the above equation (2), values of the bulk phase function $p(Angle)$ are measured at discrete values of angles $Angle_i \equiv [\Theta_i, \Phi_i, \beta_i]$. The measurement can be performed as shown in Fig. 1. I.e., a moving airplane or helicopter at which the source of directional radiation in the form of an antenna is installed continuously irradiates a piece of forest and measures the backscattered signal in discrete instances of time. The measurement is performed over a limited range of angles $Angle \in \langle Angle_1, Angle_2 \rangle$. This results in a set of linear equations (2) for different angles. The inversion procedure will provide a distribution function $f(r)$ restricted to sizes $r \in \langle r_1, r_2 \rangle$.

In principle, the set of equations (2) for different angles represents a mapping in Hilbert space from $L^2[Angle_1, Angle_2]$ to $L^2[r_1, r_2]$ constructed over the set of quadratically integrable and continuous functions $f(r)$. This set of equations can be solved by well-known techniques. E.g. the widely used Tikhonov's regularization (see document [2]) can be employed to solve the set of equations (2) for a kernel with the form $S_{11}(Angle, r)/(\pi r^2)$. As a result, the function $f(r)$ is determined. From this function, the volume of the woody environment in the piece of forest can be calculated as follows:

$$volume = \int_{r_1}^{r_2} \frac{4}{3}\pi r^3 f(r) dr \qquad (5)$$

By using the density of wood, the biomass in the piece of forest can be calculated by multiplying the volume according to equation (5) with the density.

The above described variant of the invention retrieves the number of trees in dependence on the radius of a virtual sphere r, i.e. in dependence on the volume of the trees. By assuming a mean radius of the trees in the piece of forest, a second embodiment of the invention may be used in order to determine the number of trees in a piece of forest. To do so, just a single instantaneous measurement of the phase function p for the backscattered beam is sufficient for determining the number the trees. In other words, instead of using the integral equation (2), one can write the bulk phase function p as follows:

$$p(\theta, \varphi, \Theta, \Phi, \beta, r_{mean}, \lambda, \varepsilon) = \left(\frac{\lambda^2}{2\pi}\right) \frac{S_{11}(\theta, \varphi, \Theta, \Phi, \beta, r_{mean}, \lambda, \varepsilon)}{\pi r_{mean}^2} N \qquad (6)$$

where $r_{mean}$ characterizes an average tree which volume is given by the above equation (3). Knowing the geometrical configuration, i.e. the position of an airplane and the position of the monitored piece of forest, the Euler angles characterizing the orientation of the cylindrical trees can be obtained immediately. Then $r_{mean}$ and the total number of trees N in the piece of forest can be retrieved by equation (6). The corresponding average volume of biomass in the piece of forest is then given by:

$$volume = \frac{4}{3} \pi r_{mean}^3 N \qquad (7)$$

By multiplying this volume with the density of wood, the biomass and the piece of forest can be obtained.

As already mentioned above, only the backscattered signal, i.e. $\theta = \pi$, is measured. In this case, the information on $\varphi$ is irrelevant and one can for example use $\varphi = 0$ in the above described calculations. Furthermore, the wavelength of the radiation used for the measurements should lie in the range of the diameter of the trees. Hence, in a preferred embodiment, the antennas irradiating the beams operate in a frequency range between MHz and GHz. At these wavelengths, the typical relative permittivity $\varepsilon_{rel}$ of wood varies from 1.2 to 2.1, while the loss tangent $\tan\delta$ is about 0.03 to 0.04. The dielectric function is then described by $\varepsilon = \varepsilon_0 \varepsilon_{rel}(1 - i \tan\delta)$.

This function with values of $\varepsilon_{rel}$ and $\tan\delta$ in the above specified range is used in a preferred embodiment for determining the scattering phase function $S_{11}$ and thus calculating the number of trees in a piece of forest.

Following a statistical point of view, the spatial distribution of trees is considered to be random. Nevertheless, all trees are equally oriented, so that changes of the angle $Angle_i = [\Theta_i, \Phi_i, \beta_i]$ can be managed through Euler angle $\Theta_i$. The other two Euler angles can be fixed, as already described above. The randomly oriented limbs of the trees in the piece of forest contribute only negligibly to the backscattered signal, so that the fraction of the backscattered signal corresponding to the limbs can be treated as a constant background.

The above described embodiments of the invention have several advantages. Particularly, a position-specific monitoring of wood mass in a forest is possible. This monitoring can be performed in any region including poorly accessible places in complex terrain or mountains. The method of the invention is a remote sensing method and thus saves resources and expenses needed for in-situ manual monitoring of large-scale forest regions. Furthermore, the method of the invention works with much better resolution that other methods and allows a very detailed granularity compared to satellite measurements.

List of References:

[1] User Guide for the Discrete Dipole Approximation Code DDSCAT 6.1,
http://arxiv.org/PS cache/astro-ph/pdf/0409/0409262v2. pdf;

[2] A.N. Tikhonov and A.V. Goncharsky, "Ill-Posed Problems in the Natural Sciences", Mir Publishers, Moscow, 1987, pages 29-50.

Claims

1. A method for analysing a forest environment by using beams (B1, B2) of electromagnetic radiation, comprising the steps of:

- measuring one or more values of a bulk scattering phase function of one or more scattered beams (B2) or providing measurements of one or more values of a bulk scattering phase function of one or more scattered beams (B2) as input data, each scattered beam (B2) resulting from a scattering of a beam incident (B1) on a piece of forest (1) in a predetermined direction;
- determining the number of trees in the piece of forest (1) based on a physical dependency between the one or more values of the bulk scattering phase function of the one or more scattered beams (B2) and the number of trees in the piece of forest (1).

2.  A method according to claim 1, wherein the physical dependency between the one or more values of the bulk scattering phase function of the one or more scattered beams (B2) and the number of trees in the piece of forest (1) includes the $S_{11}$ scattering phase function of the Mueller matrix, the values of said $S_{11}$ scattering phase function depending on the direction of the incident and scattered beams (B1, B2) with respect to the cylindrical trees in the piece of forest.

3.  The method according to claim 2, wherein one or more values of the $S_{11}$ scattering phase function are calculated based on a discrete dipole approximation.

4.  The method according to one of the preceding claims,
    wherein the number of trees includes the number of trees for different tree volumes.

5.  The method according to claim 4, wherein the method is based on several values of the bulk phase function of scattered beams (B2) for different directions of incident beams (B1) and wherein the following physical dependency between each value of the bulk phase function for a scattered beam (B2) and the number of trees in the piece of forest (1) is used for determining the number of trees with different volumes:

$$p(\theta,\varphi,\Theta,\Phi,\beta,r,\lambda,\varepsilon)=\left(\frac{\lambda^2}{2\pi}\right)\int_0^\infty \frac{S_{11}(\theta,\varphi,\Theta,\Phi,\beta,r,\lambda,\varepsilon)}{\pi r^2} f(r)dr \quad ,$$

wherein
p is the bulk scattering phase function for a scattered beam (B2);
$S_{11}(\theta,\varphi,\Theta,\Phi,\beta,r,\lambda,\varepsilon)$ is the $S_{11}$ scattering phase function of the Mueller matrix;
$\theta,\varphi$ describe the direction and scattering plane of the scattered beam (B2);
$\Theta,\Phi,\beta$ are Euler angles describing the orientation of the trees in the piece of wood with respect to the incident beam (B1);
$r$ is radius of a virtual sphere having the volume identical to the volume of a cylindrical tree having length l and radius a;
$\lambda$ is the wavelength of the electromagnetic radiation of the beams (B1, B2);
$\varepsilon$ is the dielectric constant of wood;
$f(r)$ is the number of trees in the piece of forest (1) having length 1 and radius a.

6.  The method according to one of the preceding claims,
    wherein the number of trees includes the number of tress with a predetermined volume, particularly with an average volume.

7.  The method according to claim 6, wherein the method is based on a single value of the bulk scattering phase function for a scattered beam (B2) and the following physical dependency between the single value of the bulk scattering phase function of the scattered beam (B2) and the number of trees in the piece of forest (1) is used for determining the number of trees with an average volume:

$$p(\theta,\varphi,\Theta,\Phi,\beta,r_{mean},\lambda,\varepsilon)=\left(\frac{\lambda^2}{2\pi}\right)\frac{S_{11}(\theta,\varphi,\Theta,\Phi,\beta,r_{mean},\lambda,\varepsilon)}{\pi r_{mean}^2} N$$

wherein
p is the bulk scattering phase function of the scattered beam (B2);
$S_{11}(\theta,\varphi,\Theta,\Phi,\beta,r,\lambda,\varepsilon)$ is the $S_{11}$ scattering phase function of the Mueller matrix;

$\theta$ ,$\varphi$ describe the direction and scattering plane of the scattered beam (B2);

$\Theta$ ,$\Phi$,$\beta$ are Euler angles describing the orientation of the trees in the piece of wood with respect to the incident beam (B1);

$r_{mean}$ is the radius of a virtual sphere having the average volume of a tree;

$\lambda$ is the wavelength of the electromagnetic radiation of the beams (B1, B2);

$\varepsilon$ is the dielectric constant of wood at the wavelength of the incident beam (B1);

N is the number of trees in the piece of forest (1) with the average volume.

8. The method according to one of the preceding claims,
wherein the biomass volume and/or the biomass of the piece of forest are calculated by using the number of trees in the piece of forest (1).

9. The method according to one of the preceding claims,
wherein the dielectric constant $\varepsilon$ of the wood of the trees in the piece of forest (1) is included in the physical dependency between the one or more values of the bulk scattering phase function of the one or more scattered beams (B2) and the number of trees in the piece of forest (1) as follows:

$$\varepsilon = \varepsilon_0 \, \varepsilon_{rel} \left(1 - i \tan\delta\right).$$

where
$\varepsilon_{rel}$ assumes a value between 1.2 to 2.1 and
$\tan\delta$ assumes a value between 0.03 and 0.04.

10. The method according to one of the preceding claims,
wherein the wavelength of the electromagnetic radiation of the beams (B1, B2) is such that it corresponds to an estimated radius of the trees in the piece of forest (1).

11. The method according to one of the preceding claims,
wherein the one or more values of the bulk scattering phase function of the one or more scattered beams (B2) result from measurements where an antenna sends a beam (B1) in a predetermined direction to the piece of forest (1) and a detector detects the beam after being scattered at the piece of forest (1).

12. The method of claim 11, wherein the antenna and the detector are part of a plane (2) or helicopter flying across the piece of forest (1).

13. A device for analysing a forest environment (1) by using beams (B1, B2) of electromagnetic radiation, comprising:

- means for measuring one or more values of a bulk scattering phase function of one or more scattered beams (B1, B2) or providing measurements of one or more values of a bulk scattering phase function of one or more scattered beams (B1 B2) as input data, each scattered beam (B2) resulting from a scattering of a beam (B1) incident on a piece of forest (1) in a predetermined direction;
- means for determining the number of trees in the piece of forest (1) based on a physical dependency between the one or more values of the bulk scattering phase function of the one or more scattered beams (B2) and the number of trees in the piece of forest (1).

14. The device according to claim 13, wherein the device is adapted to perform a method according to one of claims 1 to 12.

15. A computer program product directly loadable into the internal memory of a digital computer, comprising software code portions for performing the method of one of claims 1 to 12 when the product is run on a computer.

FIG 1

FIG 2

Europäisches
Patentamt

European
Patent Office

Office européen
des brevets

# EUROPEAN SEARCH REPORT

Application Number

EP 08 01 7024

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 886 662 A (JOHNSON PATRICK W [US]) 23 March 1999 (1999-03-23) * column 6, line 66 - column 7, line 26 * * column 8, lines 1-27 * * column 12, line 52 - column 14, line 45; figure 8 * | 1,3,5, 8-15 | INV. G01V3/17 G01S13/90 |
| X | GARY SMITH ET AL: "A Model Relating VHF-Band Backscatter to Stem Volume of Coniferous Boreal Forest" IEEE TRANSACTIONS ON GEOSCIENCE AND REMOTE SENSING, IEEE SERVICE CENTER, PISCATAWAY, NJ, US, vol. 38, no. 2, 1 March 2000 (2000-03-01), XP011021507 ISSN: 0196-2892 * pages 730-733 * | 1-3,7,8, 10-15 | |
| X | JP 2004 037339 A (MITSUBISHI MATERIALS NATURAL R; EARTH REMOTE SENSING DATA ANAL) 5 February 2004 (2004-02-05) * abstract * * paragraphs [0001], [0006], [0009], [0012], [0018] - [0021] * | 1,2,4,6, 8,10-15 | TECHNICAL FIELDS SEARCHED (IPC) G01V G01S |
| A | PIERRE MELON ET AL: "On the Retrieving of Forest Stem Volume From VHF SAR Data: Observation and Modeling" IEEE TRANSACTIONS ON GEOSCIENCE AND REMOTE SENSING, IEEE SERVICE CENTER, PISCATAWAY, NJ, US, vol. 39, no. 11, 1 November 2001 (2001-11-01), XP011021877 ISSN: 0196-2892 * abstract * * paragraphs [2368], [2369] * | 1,13,15 | |

The present search report has been drawn up for all claims

| Place of search | Date of completion of the search | Examiner |
|---|---|---|
| Munich | 26 February 2009 | Trique, Michael |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT**
**ON EUROPEAN PATENT APPLICATION NO.**                    EP 08 01 7024

This annex lists the patent family members relating to the patent documents cited in the above-mentioned European search report.
The members are as contained in the European Patent Office EDP file on
The European Patent Office is in no way liable for these particulars which are merely given for the purpose of information.

26-02-2009

| Patent document cited in search report | | Publication date | Patent family member(s) | | Publication date |
|---|---|---|---|---|---|
| US 5886662 | A | 23-03-1999 | NONE | | |
| JP 2004037339 | A | 05-02-2004 | JP | 3709178 B2 | 19-10-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A.N. Tikhonov ; A.V. Goncharsky.** Ill-Posed Problems in the Natural Sciences. Mir Publishers, 1987, 29-50